(19) **Europäisches Patentamt / European Patent Office / Office européen des brevets**

(11) **EP 1 821 074 A2**

(12) **EUROPEAN PATENT APPLICATION**

(43) Date of publication:
**22.08.2007 Bulletin 2007/34**

(51) Int Cl.:
**G01D 5/244** (2006.01)

(21) Application number: **07002838.6**

(22) Date of filing: **09.02.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **15.02.2006 JP 2006037833**

(71) Applicant: **FANUC LTD**
**Minamitsuru-gun,**
**Yamanashi 401-0597 (JP)**

(72) Inventors:
• **Taniguchi, Mitsuyuki**
**Gotenba-shi**
**Shizuoka 412-0045 (JP)**

• **Kikuchi, Hirofumi**
**Minamitsuru-gun**
**Yamanashi 401-0511 (JP)**
• **Matsuo, Tadayoshi**
**Minamitsuru-gun**
**Yamanashi 401-08511 (JP)**

(74) Representative: **Schmidt, Steffen**
**Wuesthoff & Wuesthoff**
**Patentanwälte**
**Schweigerstrasse 2**
**81541 München (DE)**

(54) **Offset correction circuit of encoder**

(57) An encoder sampling a first phase (A) signal and second phase (B) signal with phases differing from each other by about 90 degrees at the same timing, converting them from an analog to digital format, and detecting an angle signal based on the obtained digital signals, provided with offset detection circuits using a second phase A/D converted value ($B_D$) of when a first phase A/D converted value ($A_D$) is near a first value ($X_A$) to find a second phase (B) offset value (Bofs), using a first phase A/D converted value ($A_D$) of when a second phase A/D converted value ($B_D$) is near a second value ($X_B$) to find a first phase (A) offset value (Aofs), and using the currently found first offset value (Aofs) for the first value ($X_A$) and the currently found second offset value (Bofs) for the second value ($X_B$) when calculating the next first offset value (Aofs) and second offset value (Bofs) and a subtraction circuits using a first offset value (Aofs) and second offset value (Bofs) to correct offsets of the first phase signal and second phase signal, whereby correct offset amounts can be obtained with regard as to the length of the sampling periods or the magnitudes of the offsets.

Fig.1
PRIOR ART

**Description**

CROSS-REFERENCE TO RELATED APPLICATIONS

This application is based upon and claims a priority of Japanese Patent Application No. 2006-037833, filed February 15, 2006, the contents being incorporated herein by reference.

BACKGROUND OF THE INVENTION

1. Field of the Invention

The present invention relates to an improvement of the assignee's Japanese Patent No. 3026949 "offset correction circuit of encoder" and is used for position detection of a motor or linear encoder used in an NC machine tool or industrial robot, more particularly relates to an offset correction circuit for compensating for offset of an encoder.

2. Description of the Related Art

When finding the amount of movement of a moving body as an amount of angle, the method is known of detecting the amount of movement of the moving body as a sine wave, cosine wave, or other analog amount by a position detector, converting the detected analog amount to a digital amount, then converting this to an amount of angle by an encoder.

An encoder detects two signals of a phase-offset A-phase signal and B-phase signal for improving the resolution, converts these two phase signals by A/D converters to digital signals, and calculates the angle based on the converted digital signals. When a zero level of the sine wave or cosine wave becomes offset in the encoder, an offset occurs and error occurs in the detected amount of angle.

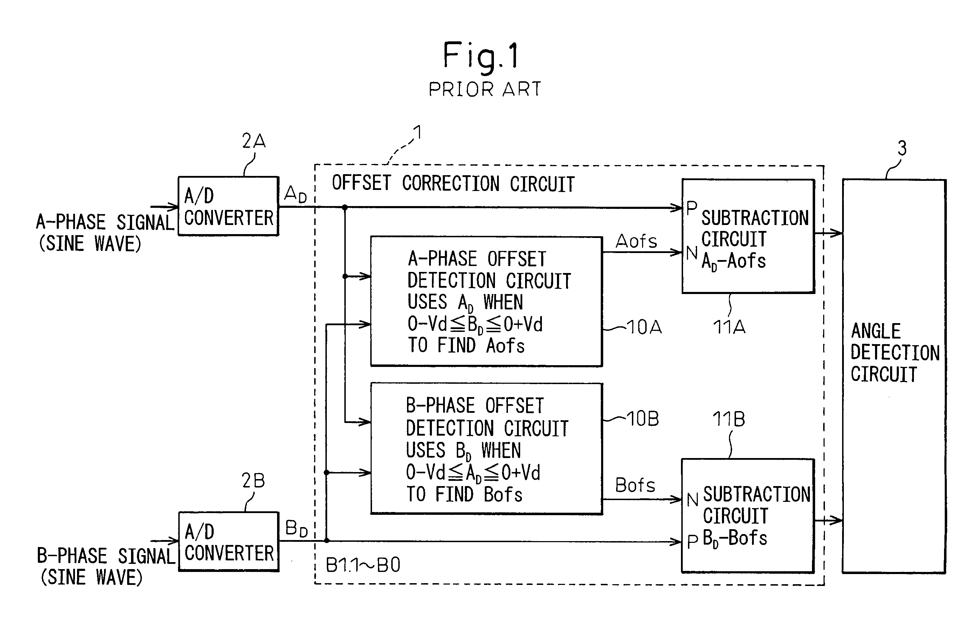

FIG. 1 is a schematic block diagram of an offset correction circuit of an encoder described in the assignee's Japanese Patent No. 3026949. In FIG. 1, an offset correction circuit 1 shown by the broken line is provided with an A-phase offset detection circuit 10A, a B-phase offset detection circuit 10B, and subtraction circuits 11A and 11B.

The A-phase offset detection circuit 10A is a detection circuit using the A-phase A/D converted value to find the A-phase offset value Aofs when the B-phase A/D converted value is near zero, receives as inputs the digital value $A_D$ obtained by converting the A-phase signal from an analog to digital format by the A/D converter 2A and the digital value $B_D$ obtained by converting the B-phase signal from an analog to digital format by the A/D converter 2B, judges whether the B-phase A/D converted value $B_D$ is near zero by judging if $0-Vd \leq B_D \leq 0+Vd$ is satisfied, detects the A/D converted value of the A-phase side at the timing of the clock of A/D conversion when the B-phase is near zero, and uses this value to find the A-phase offset value Aofs.

Further, the B-phase offset detection circuit 10B is a detection circuit using the B-phase A/D converted value $B_D$ to find the B-phase offset value Bofs when the A-phase A/D converted value is near zero, receives as inputs the digital value $B_D$ obtained by converting the B-phase signal from an analog to digital format by the A/D converter 2B and digital value $A_D$ obtained by converting the A-phase signal from an analog to digital format by the A/D converter 2A, detects the A-phase A/D converted value near when the A-phase signal crosses zero, and uses this value to find the B-phase offset value Bofs.

The subtraction circuits 11A and 11B are compensation circuits using the offset values detected by the offset detection circuits 10A and 10B to compensate for the offsets included in the different phase A/D converted values. The subtraction circuit 11A receives as input the A-phase A/D converted value $A_D$ at its P-terminal, receives as input the A-phase offset value Aofs at its N-terminal, and performs the subtraction operation $(A_D-Aofs)$. Further, the subtraction circuit 11B receives as input the B-phase A/D converted value $B_D$ at its P-terminal, receives as input the B-phase offset value Bofs at its N-terminal, and performs the subtraction operation $(B_D-Bofs)$. The subtraction circuits 11A and 11B output the offset-corrected A-phase signal and B-phase signal, then the angle detection circuit 3 detects the angle.

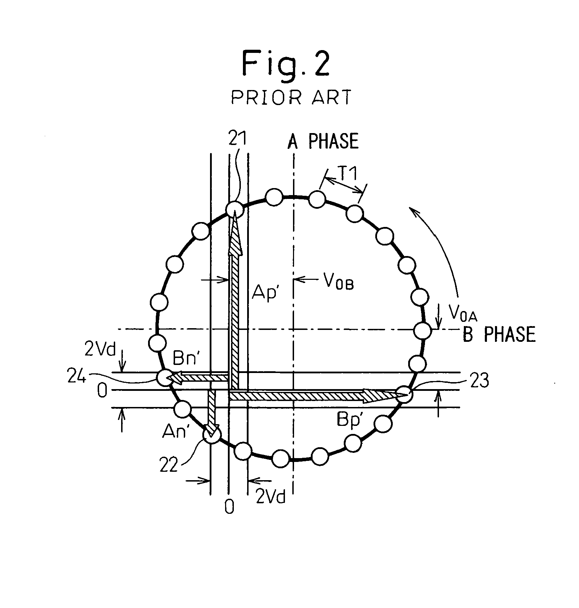

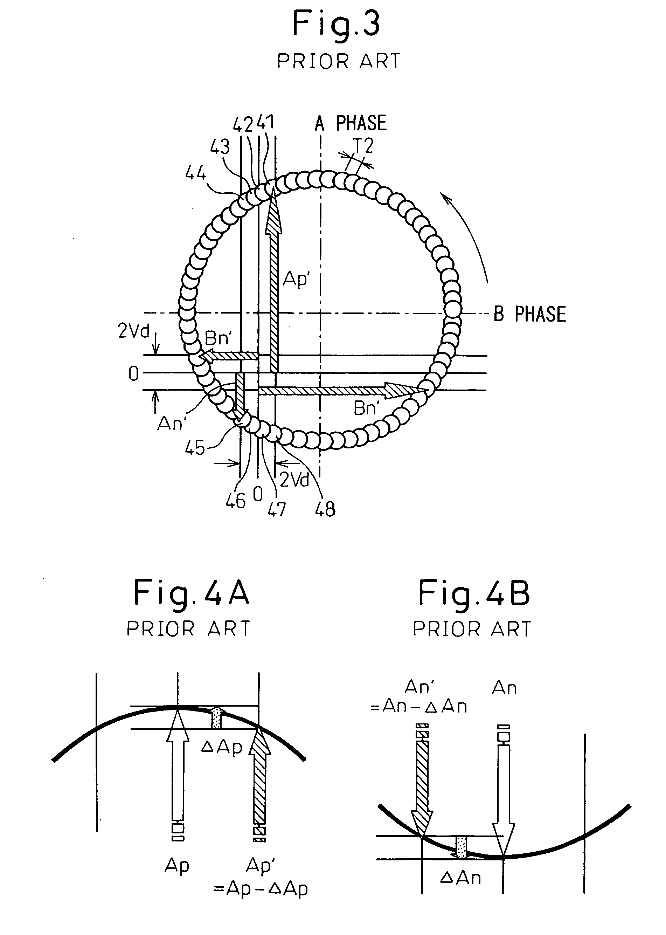

FIG. 2 is a view for explaining an example of an operation for detection of an offset value of the conventional offset detection circuit shown in FIG. 1, while FIG. 3 is a view for explaining another example of the operation for detection of an offset value of the conventional offset detection circuit shown in FIG. 1. In FIG. 2 and FIG. 3, one turn of the circle expresses 360° of the A-phase or B-phase signal. The blank dots on the circle express the sampling times. The points where the one-dot-chain line ordinate and abscissa intersect the circle express the zero cross points where the offsets of the A-phase and B-phase are zero. The points where the vertical direction solid line 0 and horizontal direction solid line 0 intersect the circle express the zero cross points where the offsets of the A-phase and B-phase are finite values.

As illustrated, in sampling of an actual signal, the zero cross points and the sampling periods of the signal do not necessarily always match. For this reason, the threshold value for detecting a zero cross point where a signal crosses zero is given a margin $(0 \pm Vd)$. A sampling value detected in this range is made the phase sampling value when the signal crosses zero.

That is, when there is no offset, in terms of coordinates on the one-dot chain lines, the A-phase side positive and negative values at the B-phase side zero cross point become equal in absolute value. Further, the B-phase side positive and negative values at the A-phase side zero cross point become equal in absolute value. At this time, the values sampled in the range of $(0\pm Vd)$ are made the A-phase and B-phase values.

Further, when there is offset, in terms of coordinates on the solid lines, the average value of the A-phase side absolute values of the positive value Ap' (sampling value of sampling time 21 in FIG. 2) and the negative value An' (sampling value of sampling time 22 in FIG. 2) on the B-phase side zero cross point is made the A-phase value. Similarly, the average value of the B-phase side absolute values of the positive value Bp' (blank dot 23 in FIG. 2) and negative value Bn' (blank dot 24 in FIG. 2) on the A-phase side zero cross point is made the B-phase value.

In this way, a conventional circuit detects each phase voltage not at the zero cross point of the A/D converted value of the other phase, but near the zero cross point $(0\pm Vd)$. For this reason, as shown in FIG. 2, when the sampling period T1 is relatively small relative to the 360° period of the input signal (one turn of the circle of FIG. 2), even if the zero cross point and sampling time become off, the amount of offset can be obtained.

Related references are Japanese Patent No. 3026949B and Japanese Patent Publication No. 2002-372437A.

However, as shown in FIG. 3, when the sampling period T2 is relatively small relative to the input signal period, there are a plurality of sampling values in the range of $(0\pm Vd)$. For example, regarding the A-phase, there are a plurality of sampling times 41, 42, 43, 44, 45, 46, 47, and 48 when the B-phase A/D converted value is in the range of $0\pm Vd$. When obtaining the sampling values in the illustrated counterclockwise direction, the A-phase positive converted value Ap' in the case where the B-phase A/D converted value is 0+Vd is the value of the first sampling time 41 in the sampling times 41 to 44, while the A-phase positive converted value An' in the case where the B-phase A/D converted value is 0-Vd is the value of the first sampling time 45 in the sampling times 45 to 48. Further, the average value of these two values $\{(Ap'+An')/2\}$ is made the offset value.

That is, the offset value is expressed as follows:

$$(Ap'+An')/2=\{(Ap-\Delta Ap)+(An-\Delta An)\}/2$$

$$=(Ap+An)/2-(\Delta Ap+\Delta An)/2$$

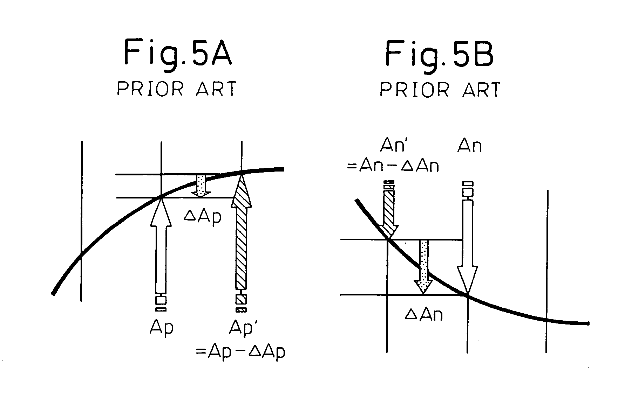

This problem will be explained using FIGS. 4A and 4B and FIGS. 5A and 5B. First, there is no problem in the state of FIGS. 4A and 4B. FIG. 4A is a graph showing the A/D converted value Ap of the A-phase sampling value corresponding to the B-phase zero cross point when the B-phase offset is 0 and the A/D converted value Ap' of the A-phase sampling value corresponding to the B-phase zero cross point when the offset value is $-\triangle Ap$, while FIG. 4B is a graph showing the A/D converted value An of the A-phase sampling value corresponding to the B-phase zero cross point when the B-phase offset is 0 and the A/D converted value Ap' of the A-phase sampling value corresponding to the B-phase zero cross point when the offset value is $-\triangle An$. In this case, since the offset values $-\triangle Ap$ and $-\triangle An$ are small,

$$-\Delta Ap+(-\Delta An)\cong 0$$

$$(Ap'+An')/2\cong(Ap+An)/2$$

The overall values become substantially equal when there is no offset. In the same way, when the A/D converted value Bp of the B-phase sampling value near where the A-phase crosses zero and the offset values $\Delta Bp$ and $\Delta Bn$ are relatively small,

$$\Delta Bp+\Delta Bn\cong 0$$

$$(Bp'+Bn')/2\cong(Bp+Bn)/2$$

The overall offset values become substantially equal when there are no offset. In this way, there is no particular problem when the offset values are small in both phases.

FIG. 5A is a graph showing the A/D converted value Ap of the A-phase sampling value corresponding to the B-phase zero cross point when the B-phase offset is 0 and the A/D converted value Ap' of the A-phase sampling value corresponding to the B-phase zero cross point when the offset value is $+\Delta Ap$. FIG. 5B is a graph showing the A/D converted value An of the A-phase sampling value corresponding to the B-phase zero cross point and the A/D converted value An' of the A-phase sampling value corresponding to the B-phase zero cross point when the offset value $+\Delta$An is relatively large. In the case shown in FIGS. 5A and 5B, since the value $+\Delta$An of the offset is relatively large, as shown by the following equation, the overall offset values end up including large error $\alpha$.

$$\Delta Ap + \Delta An \neq 0$$

$$(Ap' + An') / 2 = (Ap + An) / 2 - \alpha$$

Similarly, even when the offset value at the B-phase is large, the average offset value ends up including large error.

Therefore, in the related art, when at least one of the phase offsets is large and the sampling period T2 is small relative to the input signal period, there is the problem that the correct amount of offset cannot be obtained.

SUMMARY OF THE INVENTION

An object of the present invention, in consideration of the above prior art, is to provide an offset correction circuit of an encoder able to obtain the correct amount of offset regardless of the length of the sampling period or magnitude of the offset.

According to a first aspect of the present invention, there is provided an offset correction circuit of an encoder sampling a first phase signal and second phase signal with phases differing from each other by about 90 degrees at the same timing, converting them from an analog to digital format, and detecting an angle signal based on the obtained digital signals, provided with offset detection circuits using a second phase A/D converted value of when a first phase A/D converted value is near a first value to find a second phase offset value, using a first phase A/D converted value of when a second phase A/D converted value is near a second value to find a first phase offset value, and using the currently found first offset value for the first value and the currently found second offset value for the second value when calculating the next first offset value and second offset value and correction circuits using a first offset value and second offset value to correct offsets of the first phase signal and second phase signal.

The offset detection circuits preferably make the initial values of the first value and the second value zero.

Further, the offset detection circuits preferably calculate the average value of the second phase positive A/D converted value and second phase negative A/D converted value when the first phase A/D converted value is within a range set by a threshold value near the first value and detect the average value as a second phase offset value and calculate the average value of the first phase positive A/D converted value and first phase negative A/D converted value when the second phase A/D converted value is within a range set by a threshold value near the second value and detect the average value as a first phase offset value.

Further, the offset values are preferably values calculated from a plurality of positive A/D converted values and a plurality of negative A/D converted values.

Further, the positive A/D converted value and the negative A/D converted value for finding the average value are preferably alternately updated.

Further, the correction circuits are preferably compensation circuits for subtracting from one phase A/D converted value one phase offset value found by the offset detection circuits.

In the related art, the condition for detecting the different phase voltages for obtaining the amounts of offset is fixed at "0$\pm$Vd", but in the present invention, the conditions for detecting the different phase voltages for obtaining the amounts of offset are "$X_A \pm Vd$" and "$X_B \pm Vd$". $X_A$, $X_B$ track the calculated offset values. Therefore, along with repeated calculations, the effect is obtained that the calculated offset values approach the correct values.

BRIEF DESCRIPTION OF THE DRAWINGS

These and other objects and features of the present invention will become clearer from the following description of the preferred embodiments given with reference to the attached drawings, wherein:

FIG. 1 is a schematic block diagram of an offset correction circuit of an encoder described in the applicant's Japanese Patent No. 3026949;
FIG. 2 is a view for explaining an example of an operation for detection of an offset value of the conventional offset detection circuit shown in FIG. 1;
FIG. 3 is a view explaining the problem when the sampling period is small in relation to the input signal period in the conventional offset detection circuit shown in FIG. 1;
FIGS. 4A and 4B are views explaining the case where there is no problem even when the sampling period is small in relation to the input signal period in the conventional offset detection circuit shown in FIG. 1;

FIGS. 5A and 5B are views explaining the problem when there is a problem when the sampling period is small in relation to the input signal period in the conventional offset detection circuit shown in FIG. 1;

FIG. 6 is a schematic block diagram of an offset correction circuit of an encoder according to an embodiment of the present invention; and

FIGS. 7A to 7C are views for explaining the offset detection operation in the state of the times t=0, t=t1, and t=t2.

DESCRIPTION OF THE PREFERRED EMBODIMENTS

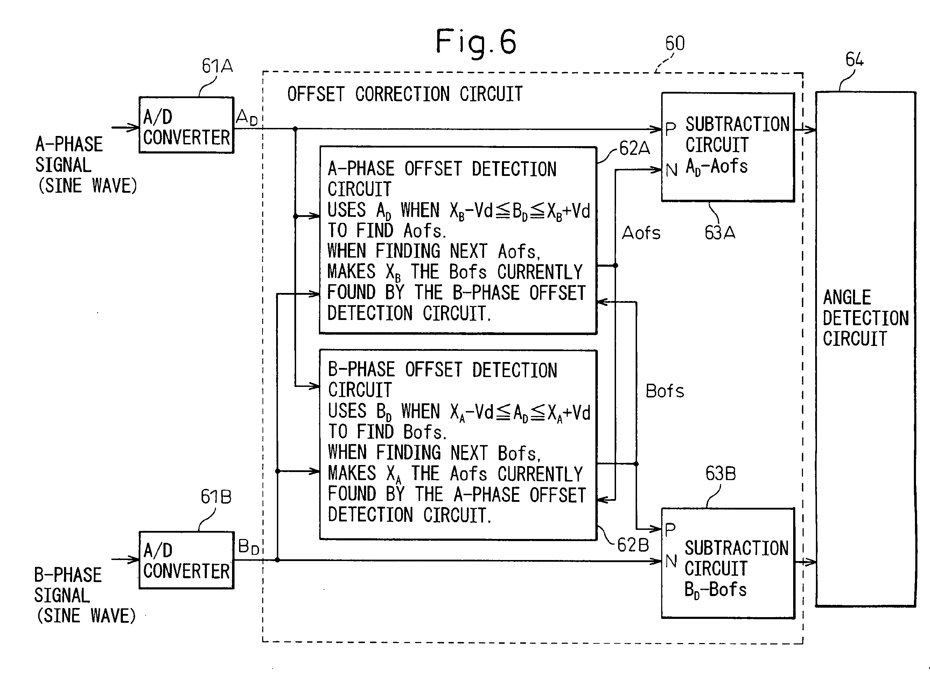

FIG. 6 is a schematic block diagram of an offset correction circuit of an encoder according to an embodiment of the present invention. In the figure, the offset correction circuit 60 shown by the broken line is provided with an A-phase offset detection circuit 62A, a B-phase offset detection circuit 62B, and subtraction circuits 63A and 63B. The A-phase signal and the B-phase signal differ in phase from each other by about 90°. The A-phase signal is converted by an A/D converter 61A to a digital signal $A_D$ and input to the A-phase offset detection circuit 62A and the B-phase offset detection circuit 62B. The B-phase signal is converted by an A/D converter 61B to a digital signal $B_D$ and input to the A-phase offset detection circuit 62A and B-phase offset detection circuit 62B. The A-phase offset detection circuit 62A and B-phase offset detection circuit 62B obtain the offset values Aofs and Bofs based on the A-phase and B-phase digital signals by the method described below.

The A-phase offset detection circuit 62A uses the A-phase A/D converted value $A_D$ to find the A-phase offset value Aofs in the case where the B-phase A/D converted value $B_D$ is the value $X_B$. Further, when calculating the next offset value Aofs, it uses the currently found offset value Bofs for the value $X_B$.

The B-phase offset detection circuit 62B uses the B-phase A/D converted value $B_D$ to find the B-phase offset value Bofs in the case where the A-phase A/D converted value $A_D$ is the value $X_A$. Further, when calculating the next offset value Bofs, it uses the currently found offset value Aofs for the value $X_A$.

The subtraction circuits 63A and 63B are compensation circuits using the offset values detected by the offset detection circuits 62A and 62B to compensate for offsets included in the different phase A/D converted values. The subtraction circuit 63A receives as input the A-phase A/D converted value at its P-terminal and the A-phase offset value Aofs at its N-terminal and performs the operation ($A_D$-Aofs). Further, the subtraction circuit 63B receives as input the B-phase A/D converted value $B_D$ at its P-terminal and the B-phase offset value Bofs at its N-terminal and performs the operation ($B_D$-Bofs). The subtraction circuits 63A and 63B output the offset-corrected A-phase signal and B-phase signal, then the angle detection circuit 64 detects the angle.

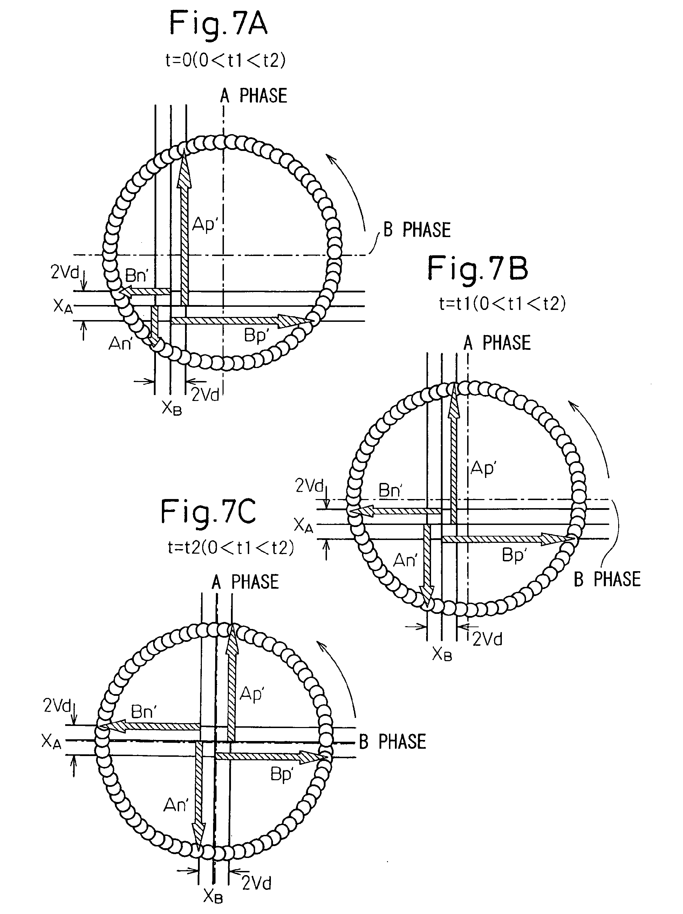

Next, the offset detection operations of the offset detection circuits according to an embodiment of the present invention will be explained with reference to FIGS. 7A to 7C. FIGS. 7A to 7C are views for explaining an offset detection operation in the states of the times t=0, t=t1, and t=t2. Here, the time t is 0<t1<t2. As will be understood from the drawings, when t=0, $X_A$ is a relatively low value, but when t=1 and t=2, it gradually becomes a higher value. Further, when t=0, $X_B$ is also a relatively low value, but when t=1 and t=2, it gradually becomes a higher value. The sampling values Ap', An', Bp', and Bn' also change with each instant along with the changes in these values $X_A$ and $X_B$.

The initial values of the values $X_A$ and $X_B$ are preferably zero. The offset detection circuits calculate the average value of the B-phase positive A/D converted value $B_{p'}$ and B-phase negative A/D converted value $B_{n'}$ when the first phase A/D converted value $A_D$ is within a range set by a threshold value near the first value $X_A$ and detect the average value as a B-phase offset value. Further, they calculate the average value of the A-phase positive A/D converted value $A_{p'}$ and A-phase negative A/D converted value $A_{n'}$ when the B-phase A/D converted value $B_D$ is within a range set by a threshold value near the second value $X_B$ and detect the average value as a A-phase offset value. The offset values are values calculated from a plurality of positive A/D converted values and a plurality of negative A/D converted values. The positive A/D converted value and the negative A/D converted value for finding the average value are alternately updated. The subtraction circuits are compensation circuits using the offset values detected by the offset detection circuits to compensate for offsets included in the A-phase and B-phase A/D converted values.

In encoders used for position detection in motors or linear encoders used in NC machine tools or industrial robots, it is possible to obtain the correct amount of offset regardless of the length of the sampling period or the magnitude of the offset.

While the invention has been described with reference to specific embodiments chosen for purpose of illustration, it should be apparent that numerous modifications could be made thereto by those skilled in the art without departing from the basic concept and scope of the invention.

**Claims**

1. An offset correction circuit of an encoder sampling a first phase signal and second phase signal with phases differing from each other by about 90 degrees at the same timing, converting them from an analog to digital format, and detecting an angle signal based on the obtained digital signals, **characterized by** comprising:

offset detection circuits (62A, 62B) using a second phase A/D converted value ($B_D$) of when a first phase A/D converted value ($A_D$)is near a first value to find a second phase offset value (Bofs), using a first phase A/D converted value ($A_D$) of when a second phase A/D converted value ($B_D$) is near a second value to find a first phase offset value (Aofs), and using the currently found first offset value (Aofs) for the first value and the currently found second offset value (Bofs) for the second value when calculating the next first offset value (Aofs) and second offset value (Bofs); and

a correction circuit (60) using a first offset value (Aofs) and second offset value (Bofs) to correct offsets of the first phase signal and second phase signal.

2. An offset correction circuit as set forth in claim 1, wherein said offset detection circuits (62A, 62B) make the initial values of the first value and the second value zero.

3. An offset correction circuit as set forth in claim 1, wherein said offset detection circuits (62A, 62B) calculate the average value of the second phase positive A/D converted value ($B_{p'}$) and second phase negative A/D converted value ($B_{n'}$) when the first phase A/D converted value ($A_D$) is within a range set by a threshold value near the first value and detect said average value as a second phase offset value and calculate the average value of the first phase positive A/D converted value ($A_{p'}$) and first phase negative A/D converted value ($A_{n'}$) when the second phase A/D converted value ($B_D$) is within a range set by a threshold value near the second value and detect said average value as a first phase offset value.

4. An offset correction circuit as set forth in claim 3, wherein said offset values are values calculated from a plurality of positive A/D converted values and a plurality of negative A/D converted values.

5. An offset correction circuit as set forth in claim 4, wherein the positive A/D converted value and the negative A/D converted value for finding the average value are alternately updated.

6. An offset correction circuit as set forth in claim 1, wherein the correction circuit (60) is comprised of subtraction circuits (63A, 63B) for subtracting from one phase A/D converted value one phase offset value found by the offset detection circuits (62A, 62B).

# Fig.1

PRIOR ART

A-PHASE SIGNAL (SINE WAVE) → **A/D CONVERTER** 2A → $A_D$

B-PHASE SIGNAL (SINE WAVE) → **A/D CONVERTER** 2B → $B_D$

**OFFSET CORRECTION CIRCUIT** 1

**A-PHASE OFFSET DETECTION CIRCUIT** 10A
USES $A_D$ WHEN $0-Vd \leq B_D \leq 0+Vd$ TO FIND Aofs → Aofs

**B-PHASE OFFSET DETECTION CIRCUIT** 10B
USES $B_D$ WHEN $0-Vd \leq A_D \leq 0+Vd$ TO FIND Bofs → Bofs

B11~B0

**SUBTRACTION CIRCUIT** $A_D$-Aofs 11A (P, N)

**SUBTRACTION CIRCUIT** $B_D$-Bofs 11B (N, P)

**ANGLE DETECTION CIRCUIT** 3

EP 1 821 074 A2

# Fig. 2
## PRIOR ART

# Fig.3
PRIOR ART

# Fig.4A
PRIOR ART

# Fig.4B
PRIOR ART

# Fig.5A
PRIOR ART

ΔAp

Ap

Ap'
=Ap−ΔAp

# Fig.5B
PRIOR ART

An'
=An−ΔAn

An

ΔAn

Fig.6

OFFSET CORRECTION CIRCUIT 60

A-PHASE SIGNAL (SINE WAVE)

A/D CONVERTER 61A

$A_D$

A-PHASE OFFSET DETECTION CIRCUIT
USES $A_D$ WHEN $X_B - Vd \leqq B_D \leqq X_B + Vd$ TO FIND Aofs.
WHEN FINDING NEXT Aofs, MAKES $X_B$ THE Bofs CURRENTLY FOUND BY THE B-PHASE OFFSET DETECTION CIRCUIT.
62A

Aofs

SUBTRACTION CIRCUIT $A_D$ – Aofs
P
N
63A

B-PHASE SIGNAL (SINE WAVE)

A/D CONVERTER 61B

$B_D$

B-PHASE OFFSET DETECTION CIRCUIT
USES $B_D$ WHEN $X_A - Vd \leqq A_D \leqq X_A + Vd$ TO FIND Bofs.
WHEN FINDING NEXT Bofs, MAKES $X_A$ THE Aofs CURRENTLY FOUND BY THE A-PHASE OFFSET DETECTION CIRCUIT.
62B

Bofs

SUBTRACTION CIRCUIT $B_D$ – Bofs
P
N
63B

ANGLE DETECTION CIRCUIT
64

11

# Fig.7A

t=0(0<t1<t2)

# Fig.7B

t=t1(0<t1<t2)

# Fig.7C

t=t2(0<t1<t2)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006037833 A
- JP 3026949 B

- JP 2002372437 A